# EUROPEAN PATENT APPLICATION

(11) **EP 2 007 153 A1**
(43) Date of publication of application: **24.12.2008**
(21) Application number: 06840674.3
(22) Date of filing: 27.12.2006
(51) Int. Cl.: H04Q 7/30

(54) **A METHOD AND APPLICATION FOR MONITORING SYSTEM RESOURCES**

(30) Priority: 29.03.2006 CN 200610073426; 23.06.2006 CN 200610093353
(71) Applicant: Huawei Technologies Co., Ltd., Longgang District, Shenzhen, Guangdong 518129 (CN)
(72) Inventor: YUAN, Yi, Shenzhen Guangdong 518129 (CN); ZHAO, Gang, Shenzhen Guangdong 518129 (CN); WANG, Chao, Shenzhen Guangdong 518129 (CN)
(74) Representative: Hengelhaupt, Jürgen
(86) International application number: PCT/CN2006/003632
(87) International publication number: WO 2007/109942

(57) **Abstract**

The present invention provides a method and application for monitoring system resources, the method includes: a BSS begins time counting; the BSS releases the resources if the BSS does not receive, within a predetermined period, uplink information from a MS on a specified uplink TBF. With the method according to the present invention, after a BSS allocates radio resources for a MS, the BSS may monitor the allocated radio resources, so that the BSS may release the allocated radio resources in time when the MS fails to access the BSS normally for some reason, avoiding the waste of radio resources.

## Description

### CROSS REFERENCE

This application claims priorities to Chinese Patent Application No. 200610073426.5, field on March 29, 2006, entitled "Method for Monitoring System Resources", and Chinese Patent Application No. 200610093353.6, field on June 23, 2006, entitled "Method for Monitoring System Resources", commonly assigned, incorporated by reference herein for all purposes.

### FIELD OF THE INVENTION

The present invention relates to mobile communication, and more particularly, to a method and application for monitoring system resources in a packet switched handover procedure of mobile communication.

### BACKGROUND

In Packet Switched (PS) Domain of Global System for Mobile Communication (GSM), real-time PS services of conversational class, stream class and so on have strict Quality of Service (QoS) requirements on jitter ratio and packet loss ratio, therefore PS handover is introduced to alleviate the jitter ratio and packet loss ratio for real-time PS services.

The PS handover may be divided into different types according to different consideration factors. According to modes of Mobile Station (MS), the PS handover may be divided into PS handover from A/Gb mode to A/Gb mode, PS handover from A/Gb mode to Iu mode, and PS handover from Iu mode to Iu mode. According to relevant network elements, the PS handover may be divided into PS handover of intra source Base Station System (BSS), PS handover of intra SGSN (Serving General Package Radio Service, GPRS, Support Node), and PS handover of inter SGSN. According to synchronization and asynchronization, the PS handover may be divided into synchronous PS handover and asynchronous PS handover. In the synchronous PS handover, the source cell where a MS is located before the PS handover is synchronous with the target cell where the MS is located after the PS handover. Since the MS has known the Timing Advance (TA), it is an optional step for the MS to transmit an Access Burst in the target cell, and the MS may transmit a Normal Burst directly. In the asynchronous PS handover, the source cell where a MS is located before the PS handover is asynchronous with the target cell where the MS is located after the PS handover. The MS needs to transmit an Access Burst to acquire a TA before being able to transmit a Normal Burst in the target cell.

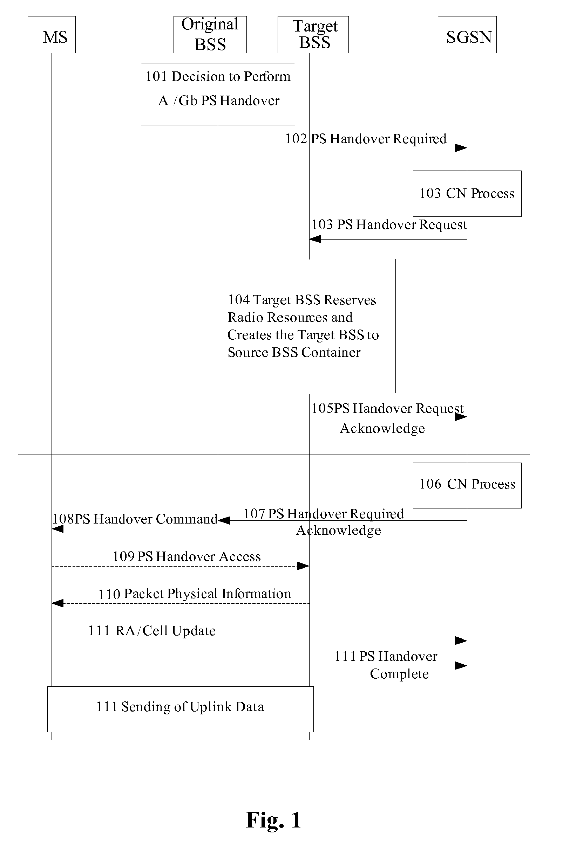

Fig. 1 is a flowchart diagram illustrating an existing PS handover procedure. As shown in Fig.1, a PS handover procedure includes a preparation stage and an execution stage, and particularly includes the following steps.

The preparation state of the PS handover procedure.

Step 101: A source BSS decide to perform an A/Gb PS handover. There are many causes leading to a PS handover. For example, the source BSS may trigger a PS handover according to a measure report from a MS; the source BSS may trigger a PS handover according to a message for requesting cell reselection which is reported actively by a MS, the message for requesting cell-reselection may be a Packet Cell Change Notification; the source BSS may trigger a PS handover when resources are limited in the cell it serves; the source BSS may trigger a PS handover according to a UMTS, Universal Mobile Telecommunication System, Territorial Radio Access Network (UTRAN) Cell Change Order (CCO) from a SGSN, so as to allow MSs to get better services in new cells.

Step 102: The source BSS sends to a SGSN a PS handover required, which includes a handover reason value, a source cell identification (ID), and a target cell ID. If the source BSS triggers the PS handover according to a measure report from a MS, or the source BSS triggers the PS handover due to limited resources in the cell it serves, the source BSS may select a target cell according to the measurement as indicated in the measure report or the load in the cells; if the source BSS triggers the PS handover according to a message for requesting cell-reselection which is reported actively by a MS, or the source BSS triggers a PS handover according to a UTRAN CCO from a SGSN, the target cell may be selected by the MS or another BSS and the source BSS is informed of the selection.

Step 103: After receiving the PS handover required, the SGSN determines the current PS handover type is an intra BSS handover, or an intra SGSN handover, or an inter SGSN handover according to the source cell ID and the target cell ID, and proceeds subsequent operations according to the determined PS handover type. The SGSN may determine the handover type according to the locations of the source cell and the target cell. If the source cell and the target cell are administrated by a same BSS, the current PS handover type is an intra BSS handover; if the source cell and the target cell are administrated by a same SGSN, the current PS handover type is an intra SGSN handover; if the source cell and the target cell are administrated by different SGSNs, the current PS handover type is an inter SGSN handover.

If the current PS handover type is an intra BSS handover or an intra SGSN handover, the SGSN, according to the target cell ID, determines the target BSS and determines whether the Routing Area (RA) is changed. If the RA is changed, the SGSN assigns a Packet Temporary Mobile Subscriber Identity (P-TMSI) to the MS, and obtains a Temporary Logical Link Identifier (TLLI) based on the P-TMSI, and then sends to the target BSS a PS handover request, which includes the P-TMSI and TTLI; if the RA is not changed, the SGSN sends to the target BSS a PS handover request directly.

If the current PS handover type is an inter SGSN handover, the source SGSN determines a target SGSN according to the target cell ID, and interacts with the target SGSN to send to the target SGSN the target cell ID and relevant information of the MS, then the target SGSN determines the target BSS according to the target cell ID and sends to the target BSS a PS handover request. The source SGSN is a SGSN which controls the source BSS where the MS is located before the PS handover, and target SGSN is a SGSN which controls the target BSS where the MS is located after the PS handover.

Step 104: After receiving the PS handover request, the target BSS allocates radio resources for the MS according to an allocating strategy and the currently allocable radio resources, and creates a target BSS to source BSS container, which contains target BSS to the source BSS radio resources allocation information, i.e., the information for describing the radio resources allocated to the MS, such as a Temporary Flow Identity (TFI). The radio resources which the target BSS allocates for the MS includes at least an uplink Temporary Block Flow (TBF), which may be identified with an Uplink State Flag (USF).

Step 105: If the current PS handover type is an intra BSS handover or an intra SGSN handover, the target BSS sends to the SGSN a PS handover request acknowledgement, which carries container information. If the current PS handover type is an inter SGSN handover, the target BSS sends to the target SGSN a PS handover request acknowledgement, which carries container information.

The execution state of the PS handover procedure.

Step 106: If the current PS handover type is an inter SGSN handover, the target SGSN, after receiving the PS handover request acknowledgement, sends to the source SGSN handover information, such as Network Service Access Point Identifier (NSAPI), User plane of GPRS Tunneling Protocol Number (GTP-U Number). If the current PS handover type is an intra BSS handover or an intra SGSN handover, this step is omitted.

Step 107: The SGSN sends to the source BSS a PS handover required acknowledgement, which carries the container information, to inform the source BSS to prepare for handover. If the current PS handover type is an inter SGSN handover, the SGSN in this step is the source SGSN.

Step 108: After receiving the PS handover required acknowledgement, the source BSS terminates the uplink services of the MS according to QoS requirement, and interrupts the downlink TBF Logic Link Control (LLC) Protocol Data Unit (PDU) of the MS, and then sends to the MS a PS Handover Command, which carries the target BSS ID, to inform the MS to perform PS handover.

Step 109: After receiving the PS handover command, the MS suspends uplink subscriber data, buffers or discards the uplink subscriber data according to the QoS requirement of the current service, and then begins to execute the handover command, turns to timeslots and radio channels of the target cell according to the target BSS ID, and sends to the target BSS, according to the PS handover command, a PS handover Access message which carries handover reference. The target cell uses the handover reference to identify the MS, and determines whether the MS accesses according to the handover reference. The target cell waits for the MS to access after allocating the radio resources for the MS.

Step 110: After receiving the PS handover access message, the target BSS returns to the MS a Packet Physical Information message, which carries a TA, to inform the MS of the correct TA. If the current PS handover type is a synchronous PS handover, this step may be omitted. This step is necessary to be performed when the current PS handover type is an asynchronous PS handover, and is optional to be performed when the current PS handover type is a synchronous PS handover.

Step 111: The MS sends to the target BSS Radio Link Control (RLC)/Media Access Control (MAC) data blocks in normal burst format. The MS begins to resume the sending of uplink LLC PDU, such as a Location Update request and so on, using the normal burst format on the radio channels allocated by the target BSS for the MS. When receiving the first correct RLC/MAC data block in normal burst format, the target BSS sends to the SGSN a PS handover complete message via a Gb interface, to inform the SGSN that the PS handover has completed.

If the current PS handover type is a synchronous PS handover, the MS may directly send RLC/MAC data blocks in normal burst format to the target BSS rather than access the target BSS through sending the PS handover access message, and the target BSS need not send to the MS the corresponding Packet Physical Information message. Therefore the steps 109, 110 may be omitted.

The above mentioned container information may carry a PS handover command, which may includes: PAGE_MODE, Global TFI, CONTAINER_ID, PS handover to A/Gb Mode Payload or PS handover to UTRAN/GERAN Iu Mode Payload. The payload is composed of a radio access portion and a Core Network (CN) portion. The radio access portion includes a synchronous handover indication, dynamically allocated or dynamically extended allocated uplink and downlink TBF parameters, PS handover reference, universal parameters for accessing the target cell. The CN portion includes frame synchronization and encryption.

It can be seen from above description that, in step 104 of the preparation stage of the PS handover, after receiving the PS handover request from the SGSN, the target BSS need allocate radio resources for the MS, the radio resources include at least uplink TBF; in steps 109, 111 of the execution stage of the PS handover, the PS handover access message or the Uplink Data Block sent from the MS to the target BSS is scheduled by the uplink TBF, so that the MS cannot send the PS handover access message or the Uplink Data Block to the target BSS until the allocated uplink TBF is detected by the MS on the allocated channel, and the PS handover access message need to be sent on the block allocated by the uplink TBF.

In summary, the target BSS allocates the uplink TBF for the MS, and the target BSS does not monitor the allocated radio resources after allocating the radio resources. If the MS fails to normally access the target BSS for some reason during the PS handover procedure, the radio resources of the target cell is reserved all the time, causing waste of the radio resources.

### SUMMARY

Accordingly, embodiments of the present invention aim to provide a method and application for monitoring system resources in order to avoiding waste of radio resources.

To achieve the above object, an embodiment of the present invention provides a method for monitoring system resources, after a BSS allocates resources for a MS in a PS handover procedure, the method further includes steps of:
A, beginning time counting by the BSS; and
B, releasing the resources if the BSS does not receive, within a predetermined period, uplink information from the MS on a specified uplink TBF.

An embodiment of the present invention further provides a BSS including a time counter, a monitor, and a controller.

The time counter is adapted to count the monitoring time of the monitor after the BSS allocates resources for a MS in a PS handover procedure, and send the time counting result to the controller.

The monitor is adapted to monitor whether uplink information from the MS is received on a specified uplink TBF, and send the monitoring result to the controller;

The controller is adapted to control the monitor to perform monitoring and control the time counter to perform time counting, and according to the time counting result of the time counter, stop time counting and stop monitoring the resources when receiving, within the time counting range of the time counter, the monitoring result of receiving the uplink information from the MS for a first time on the specified uplink TBF, and release the resources when not receiving, at the time of expire of the time counter, the monitoring result of receiving the uplink information from the MS on the specified uplink TBF.

An embodiment of the present invention further provides a system for monitoring system resources, including a BSS and a MS, the BSS includes a time counter, a monitor, and a controller, the MS includes an information sending unit.

The information sending unit is adapted to send uplink information to the monitor;

The time counter is adapted to count the monitoring time of the monitor after the BSS allocates resources for the MS in a PS handover procedure, and send the time counting result to the controller;

The monitor is adapted to monitor whether uplink information from the MS is received on a specified uplink TBF, and send the monitoring result to the controller;

The controller is adapted to control the monitor to perform monitoring and control the time counter to perform time counting, and according to the time counting result of the time counter, stop time counting and stop monitoring the resources when receiving, within the time counting range of the time counter, the monitoring result of receiving the uplink information from the MS for a first time on the specified uplink TBF, and release the resources when not receiving, at the time of expire of the time counter, the monitoring result of receiving the uplink information from the MS on the specified uplink TBF.

With the method and application according to embodiments of the present invention, after a BSS allocates radio resources for a MS in a PS handover procedure, the BSS monitors the allocated radio resources, if the MS uses the allocated radio resources within a predetermined period, the BSS stops the monitoring, otherwise the BSS may release the allocated radio resources, so that the BSS may release the allocated radio resources in time when the MS fails to access the BSS normally for some reason, avoiding the waste of radio resources.

### BRIEF DESCRIPTION OF THE DRAWINGS

Fig.1 is a flowchart diagram illustrating an existing PS handover procedure;

Fig.2 is a flowchart diagram illustrating a PS handover procedure according to an embodiment of the present invention;

Fig.3 is a schematic diagram illustrating the structure of a BSS according to an embodiment of the present invention; and

Fig.4 is a schematic diagram illustrating the structure of a system for monitoring the system resources according to an embodiment of the present invention.

### DETAILED DESCRIPTION

In order to make objects, features and advantages of the present invention more apparent, a further detailed description for the present invention is given below with reference to the accompany drawings.

In embodiments of the present invention, after a BSS allocates radio resources for a MS in a PS handover procedure, the BSS monitors the allocated radio resources, so that the BSS may release the allocated radio resources in time when the MS fails to access the BSS normally for some reason, avoiding the waste of radio resources. Technical solutions of the present invention are illustrated in the embodiments, in which the BSS is the target BSS in the PS handover procedure as an example.

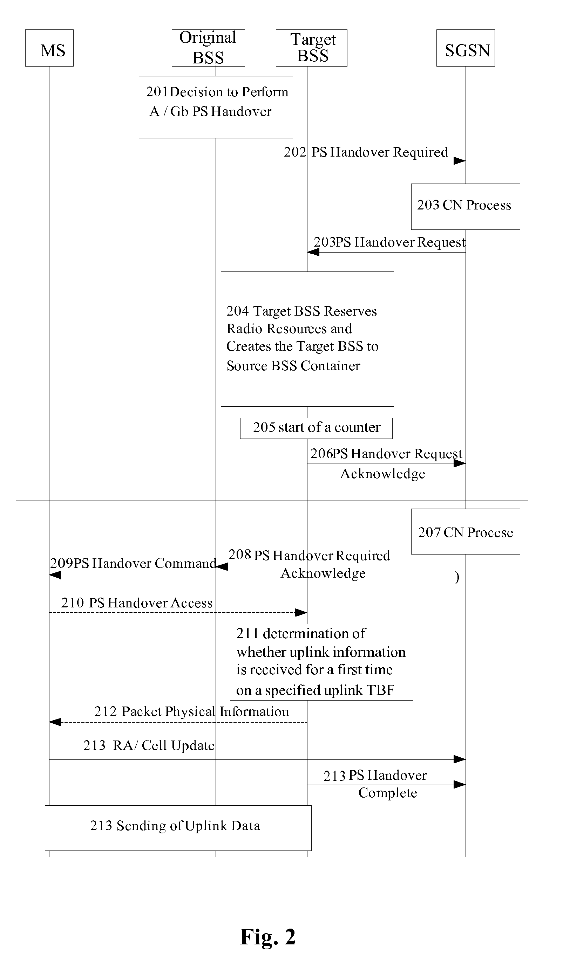

Fig.2 is a flowchart diagram illustrating a PS handover procedure according to an embodiment of the present invention, particularly includes steps of:

Steps 201-204 are identical with steps 101-104.

Step 205: The target BSS starts a counter, which is used to monitor the radio resources allocated for the MS. The counter is a timing apparatus for monitoring the allocated resources, and may be implemented with a timer. The step 205 may be performed at any time among steps 204-210.

Steps 206-210 are identical with steps 105-109.

Step 211: The target BSS determines whether uplink information from the MS is received for a first time on a specified uplink TBF. If the target BSS receives the uplink information for the first time, the target BSS stops the counting of the counter and reset the counter; if the target BSS does not receive the uplink information for the first time, the target BSS make the counter continue counting and determine whether the counter reaches a preset threshold. If the counter does not reach the preset threshold, the target BSS continues waiting for the uplink information from the MS on the specified uplink TBF, and if the counter reaches the preset threshold, the target BSS releases the radio resources allocated for the MS, so that the target BSS may release the allocated radio resources in time when the MS fails to access the target BSS normally for some reason, avoiding the waste of radio resources. When the target BSS does not receive the uplink information from the MS on the specified uplink TBF, the target BSS may allocate a USF for the MS once again. Every time the target BSS allocates a USF for the MS, the target BSS may monitor the uplink information from the MS on a corresponding uplink TBF. In this way, the target BSS continues to wait for the uplink information from the MS on the specified uplink TBF by means of reallocating the USF. The target BSS may make the counter to count in increasing manner or decreasing manner. For example, when the target BSS does not receive the uplink information from the MS for the first time on a specified uplink TBF, the target BSS make the counter to add one, and when the counter reaches the maximum preset threshold, the target BSS releases the radio resources allocated for the MS; alternatively, when the target BSS does not receive the uplink information from the MS for the first time on the specified uplink TBF, the target BSS make the counter subtract one, and when the counter reaches the minimum preset threshold, the target BSS releases the radio resources allocated for the MS.

Since the radio resources allocated by the target BSS for the MS includes at least the specified uplink TBF used for sending the uplink information, it indicates that the target BSS does not receive the uplink information from the MS if the target BSS does not detect the information on the specified uplink TBF, which is used to send the uplink information and corresponds to the MS.

Steps 212-213 are identical with steps 110-111.

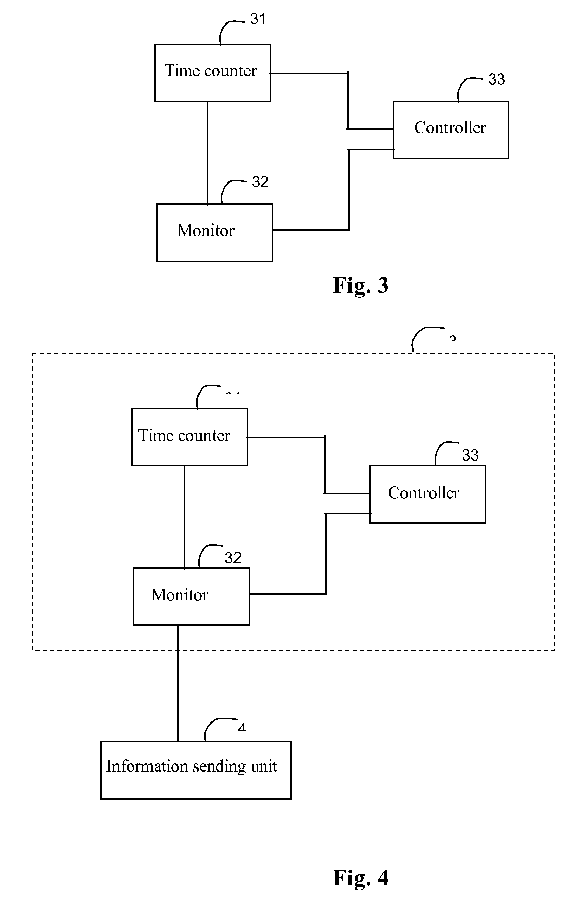

Referring to Fig.3, an embodiment of the present invention provides a BSS, which includes a time counter 31, a monitor 32, and a controller 33.

The time counter 31 is adapted to count the monitoring time of the monitor 32 after the BSS allocates radio resources for a MS in a PS handover procedure, and send the time counting result to the controller 33.

The monitor 32 is adapted to monitor whether uplink information from the MS is received on a specified uplink TBF, and send the monitoring result to the controller 33.

The controller 33 is adapted to control the monitor 32 to perform monitoring and control the time counter 31 to perform time counting, and according to the time counting result of the time counter 31, stop time counting and stop monitoring the resources when receiving, within the time counting range of the time counter 31, the monitoring result of receiving the uplink information from the MS for a first time on the specified uplink TBF, and release the resources when not receiving, at the time of expire of the time counter 31, the monitoring result of receiving the uplink information from the MS on the specified uplink TBF.

The time counter 31 may be implemented with a counter or a timer, to perform time counting in increasing manner or decreasing manner.

Referring to Fig.4, an embodiment of the present invention provides a system for monitoring system resources, which includes a BSS 3 and a MS. The BSS 3 includes a time counter 31, a monitor 32, and a controller 33, and the MS includes an information sending unit 4.

The information sending unit 4 is adapted to send uplink information to the monitor 32.

The time counter 31 is adapted to count the monitoring time of the monitor 32 after the BSS allocates radio resources for the MS in a PS handover procedure, and send the time counting result to the controller 33.

The monitor 32 is adapted to monitor whether uplink information from the MS is received on a specified uplink TBF, and send the monitoring result to the controller 33.

The controller 33 is adapted to control the monitor 32 to perform monitoring and controls the time counter 31 to perform time counting, and according to the time counting result of the time counter 31, stop time counting and stop monitoring the resources when receiving, within the time counting range of the time counter 31, the monitoring result of receiving the uplink information from the MS for a first time on the specified uplink TBF, and release the resources when not receiving, at the time of expire of the time counter 31, the monitoring result of receiving the uplink information from the MS on the specified uplink TBF.

It should be understood that above embodiments are used to illustrate the present invention rather than limit the protect scope of the present invention.

## Claims

1. A method for monitoring system resources, wherein after a Base Station System, BSS, allocates and reserves resources for a Mobile Station, MS, in a Packet Switched, PS, handover process, the method further comprises steps of:
A, beginning time counting by the BSS; and
B, releasing the resources if the BSS does not receive, within a predetermined period, uplink information from the MS on a specified uplink Temporary Block Flow, TBF.

2. The method according to claim 1, further comprises:
stopping the time counting when the BSS receives the uplink information from the MS for a first time on the specified uplink TBF.

3. The method according to claim 1, wherein the time counting by the BSS further comprises:
time counting in a clockwise manner by the BSS, until the BSS receives the uplink information from the MS for the first time on the specified uplink TBF or until a maximum preset threshold is reached; or
time counting in a counterclockwise manner by the BSS, until the BSS receives the uplink information from the MS for the first time on the specified uplink TBF or until a minimum preset threshold is reached.

4. The method according to claim 1, further comprises:
monitoring, by the BSS, whether the uplink information from the MS is received on the specified uplink TBF, and the monitoring comprises:
allocating a USF by the BSS for the MS, and
monitoring, every time a USF is allocated, accordingly the uplink information from the MS on the specified uplink TBF.

5. The method according to claim 1, wherein the uplink information comprises at least one of a PS handover access message and an uplink data block.

6. The method according to any one of claims 1 to 5, wherein the BSS performs the time counting with a counter or a timer.

7. The method according to any one of claims 1 to 5, wherein the BSS is a target BSS in the PS handover process.

8. A Base Station System, BSS, comprising a time counter (31), a monitor (32), and a controller (33), wherein
the time counter (31) is adapted to count the monitoring time of the monitor (32) after the BSS allocates and reserves radio resources for a Mobile Station, MS, in a Packet Switched, PS, handover process, and send the time counting result to the controller (33);
the monitor (32) is adapted to monitor whether uplink information from the MS is received on a specified uplink TBF, and send the monitoring result to the controller (33);
the controller (33) is adapted to control the monitor (32) to perform monitoring and control the time counter (31) to perform time counting, and according to the time counting result of the time counter (31), stop time counting when receiving, within the time counting range of the time counter (31), the monitoring result of receiving the uplink information from the MS for a first time on the specified uplink TBF, and release the resources when not receiving, at the time of expire of the time counter (31), the monitoring result of receiving the uplink information from the MS on the specified uplink TBF.

9. The BSS according to claim 8, wherein the time counter (1) is a counter or a timer.

10. A system for monitoring system resources, comprising a Base Station System, BSS, (3) and a Mobile Station, MS, the BSS (3) comprises a time counter (31), a monitor (32), and a controller (33), the MS comprises an information sending unit (4), wherein
the information sending unit (4) is adapted to send uplink information to the monitor (32);
the time counter (31) is adapted to count the monitoring time of the monitor (32) after the BSS allocates and reserves resources for the MS in a Packet Switched, PS, handover process, and send the time counting result to the controller (33);
the monitor (32) is adapted to monitor whether the uplink information from the MS is received on a specified uplink TBF, and send the monitoring result to the controller (33);
the controller (33) is adapted to control the monitor (32) to perform monitoring and control the time counter (31) to perform time counting, and according to the time counting result of the time counter (31), stop time counting when receiving, within the time counting range of the time counter (31), the monitoring result of receiving the uplink information from the MS for a first time on the specified uplink TBF, and release the resources when not receiving, at the time of expire of the time counter (31), the monitoring result of receiving the uplink information from the MS on the specified uplink TBF.
